# EUROPEAN PATENT APPLICATION

(11) **EP 3 445 076 A1**
(43) Date of publication of application: **20.02.2019**
(21) Application number: 18198438.6
(22) Date of filing: 17.10.2012
(51) Int. Cl.: H04W 12/06, H04M 1/67, H04M 1/725, G06F 21/32, H04W 52/02, H04W 8/22, G06Q 30/02, G06F 21/36, G06F 21/62, G06K 9/00, H04L 29/06, H04W 4/02, H04W 12/08, H04W 88/02, G06F 3/0488

(54) **MOBILE COMMUNICATION TERMINAL FOR PERFORMING SPECIFIC OPERATION WHEN MOBILE COMMMUNICATION TERMINAL IS ACTIVATED**

(30) Priority: 19.10.2011 KR 20110106839
(62) Divisional of application: 12842666.5
(71) Applicant: Firstface Co., Ltd, Seoul (KR)
(72) Inventor: JUNG, Jae Lark, 411-737 Goyang-si, Gyeonggi-do (KR); BAE, Kyoung Duck, 133-759 Seoul (KR)
(74) Representative: Zardi, Marco

(57) **Abstract**

Provided is a mobile communication terminal including a display unit and an activation button configured to switch an inactive state in which the display unit is off to an active state in which the display is on, in which, when the activation button is pressed, the inactive state is switched to the active state and simultaneously a predetermined operation is performed.

## Description

### BACKGROUND

### 1. Field of the Invention

The present invention relates to a method, a system, and a mobile communication terminal for performing a specific function when the mobile communication terminal is activated, and more particularly, to a method, a system, and a mobile communication terminal for performing various functions depending on the number of times or duration of time a button for switching from an inactive state to an active state is pressed.

### 2. Discussion of Related Art

Recently, all kinds of terminals, for example, such as smartphones, mobile phones, personal digital assistants (PDAs), and web pads, having not only communication functions but also various other functions have come into wide use. These terminals have rapidly been generalized because not only can an environment identical or similar to a desktop computer be implemented anytime and anywhere on the above-described terminals, but they also include a telephone function.

At present, in order to operate a corresponding function among various functions included in a terminal such as those described above, a certain operation should be performed in a state in which the terminal is in an active state, that is, in a state in which a display is turned on. In addition, in order to add a certain function, an interface or button for performing the function should be added to the terminal. For example, it is possible to transmit a rescue signal indicating an emergency or urgent situation by pressing an emergency button only when the emergency button for the urgent situation is separately added.

Meanwhile, users of the terminals described above perform operations of habitually taking out and activating the terminals on the move or in a standby state while carrying the terminals.

Specifically, the terminals generally have the button for switching from an inactive state in which a display is off to an active state in which the display is on, and at present, many users may press the activation switch button several times intentionally or unintentionally. Typical terminals show only brief information, such as a current time, on their wallpaper set by the users when the activation switch button is pressed. Accordingly, the users cannot get any beneficial information and interest when pressing the activation switch button, and then the terminals are switched from the active state to the inactive state.

### SUMMARY OF THE INVENTION

The present invention is directed to technology for enabling an advantageous function to be utilized with only a simple operation of pressing an activation button, which is habitually pressed, by connecting various operations to the activation button provided in a terminal.

The present invention is also directed to technology for enabling aged persons to check their health with only a simple operation and enabling information regarding the health check to be transmitted to a guardian or medical authority.

The present invention is also directed to technology for enabling a security-enhanced user authentication process to be operated with only a simple procedure.

The present invention is also directed to technology for enabling an urgent message to be transmitted to a necessary recipient along with location information with only a simple operation in an urgent situation.

The present invention is also directed to technology for enabling an advertising revenue and an efficient advertising effect to be generated by displaying an advertisement on the terminal when the activation button is habitually pressed by a user, by connecting an advertising display function to the activation button provided in the terminal.

According to an aspect of the present invention, there is provided a mobile communication terminal including: a display unit; and an activation button configured to switch an inactive state in which the display unit is off to an active state in which the display is on, in which, when the activation button is pressed, the inactive state is switched to the active state and simultaneously a predetermined operation is performed.

According to another aspect of the present invention, there is provided a method of performing a specific function when a mobile communication terminal is activated, the method including: sensing whether an activation button is pressed to switch from an inactive state, which is an OFF state of a display unit, to an active state, which is an ON state of the display unit; and performing a predetermined operation within the mobile communication terminal simultaneously with switching to the active state if the pressing of the activation button is sensed the inactive state.

According to still another aspect of the present invention, there is a system for providing a service for performing a specific operation when a mobile communication terminal is activated, the system including: an activation sensing unit configured to receive a sensing signal indicating that the mobile communication terminal is switched from an inactive state, which is an OFF state of a display unit, to an active state, which is an ON state of the display unit, from the mobile communication terminal; and an application driving unit configured to control a predetermined operation to be performed within the mobile communication terminal according to the switching to the active state.

### BRIEF DESCRIPTION OF THE DRAWINGS

The above and other objects, features, and advantages of the present invention will become more apparent to those of ordinary skill in the art by describing in detail exemplary embodiments thereof with reference to the accompanying drawings, in which:
FIG. 1 is a view illustrating an external appearance of a mobile communication terminal according to an embodiment of the present invention;
FIG. 2 is a view illustrating an example operation of the mobile communication terminal when an activation button is pressed according to an embodiment of the present invention;
FIGS. 3A and 3B are block diagrams illustrating the operations of the mobile communication terminal according to an embodiment of the present invention;
FIGS. 4A and 4B are block diagrams illustrating the operations of the mobile communication terminal according to another embodiment of the present invention;
FIG. 5 is a block diagram illustrating the operation of the mobile communication terminal according to still another embodiment of the present invention;
FIG. 6 is a view schematically illustrating an overall configuration of a system for displaying an advertisement when the mobile communication terminal is activated, according to an embodiment of the present invention;
FIG. 7 is a view illustrating an example in which an advertisement is displayed on a display unit when the mobile communication terminal is switched from an inactive sate to an active state according to an embodiment of the present invention;
FIG. 8 is a view illustrating a process of using some of advertising revenue as a donation according to an embodiment of the present invention;
FIG. 9 is a view illustrating a configuration of an advertisement providing system according to an embodiment of the present invention; and
FIG. 10 is a block diagram illustrating a configuration of a system for providing a predetermined operation to the mobile communication terminal according to an embodiment of the present invention.

### DETAILED DESCRIPTION OF EXEMPLARY EMBODIMENTS

In the following detailed description, reference is made to the accompanying drawings that show, by way of illustration, specific embodiments in which the present invention may be practiced. These embodiments are described in sufficient detail to enable those skilled in the art to practice the present invention. It is to be understood that the various embodiments of the present invention, although different, are not necessarily mutually exclusive. For example, a particular feature, structure, or characteristic described herein in connection with one embodiment may be implemented within other embodiments without departing from the spirit and scope of the present invention. In addition, it is to be understood that the location or arrangement of individual elements within each disclosed embodiment may be modified without departing from the spirit and scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar elements throughout several views.

Hereinafter, various preferred embodiments of the present invention will be described in more detail with reference to the accompanying drawings so that a person skilled in the art can easily practice the invention.

### [Preferred embodiments of the present invention]

The term "mobile communication terminal" used herein refers to a digital device that includes a memory means and a microprocessor with computing capability as in a mobile phone, a navigation system, a web pad, a PDA, a workstation, a personal computer (for example, a notebook computer or the like) as a digital device including wired/wireless communication functions or other functions. Although an example of the mobile communication terminal (for example, a mobile phone) will be described in part of this specification, the present invention is not limited thereto.

The term "inactive state" used herein refers to a state in which the mobile communication terminal is communicable but a display screen is turned off. Even when the display screen is turned off, a predetermined function (for example, a music play function or the like) is operable. As described above, the term "inactive state" used herein refers to a concept encompassing states in which the display screen is turned off, regardless of whether or not the mobile communication terminal performs a predetermined operation. However, a state in which the mobile communication terminal is completely turned off is excluded.

The term "active state" used herein refers to a state in which the display screen of the mobile communication terminal is turned on. Switching from the "inactive state" to the "active state" refers to switching of the display screen from the OFF state to the ON state, regardless of information displayed on the display screen in the ON state. For example, the mobile communication terminal can be determined to be in the "active state" even when only a lock screen is displayed.

### Configuration of mobile communication terminal

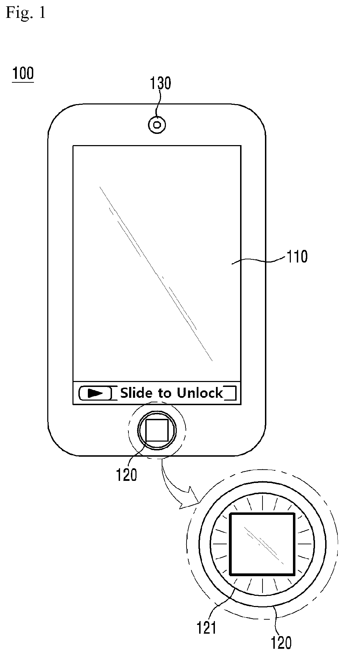

FIG. 1 is a view illustrating an external appearance of a mobile communication terminal according to an embodiment of the present invention.

Referring to FIG. 1, the mobile communication terminal 100 according to this embodiment may include a display unit 110 and an activation button 120. The mobile communication terminal 100 may further include a camera 130.

Although the display unit 110 is provided on an entire surface of a frame constituting the mobile communication terminal 100, the activation button 120 may be provided on a lower portion of the display unit 110, and the camera 130 is provided on an upper portion of the display unit 110 as illustrated in FIG. 1, the present invention may be configured in a variety of different ways. For example, the display unit 110 is not necessarily formed on the entire surface of the mobile communication terminal 100. That is, the display unit 110 may be formed on at least a portion of the mobile communication terminal 100 and the activation button 120 may be formed on a part different from that of the display unit 110. In addition, the camera 130 may be formed on the other side of the mobile communication terminal 100 where the display unit 110 is not provided.

The display unit 110 displays a variety of information about operation states of the mobile communication terminal 100, and also displays an interface for a user's input when the mobile communication terminal 100 is a touchscreen-driven terminal. In general, if a state in which the user's operation on the mobile communication terminal 100 is absent continues for a predetermined period of time, the mobile communication terminal 100 is switched to the inactive state. The user's operation refers to an input through the interface displayed on the display unit 110, an operation through the activation button 120, or an operation through a function key (for example, a volume control key or the like). A condition for switching to the inactive state may be set by a user. For example, the condition may be set in a setting menu through the interface displayed on the display unit 110. Meanwhile, the mobile communication terminal 100 may be switched to the inactive state by pressing another button (for example, an on/off button) provided thereon. For example, the mobile communication terminal 100 may be completely powered off if the on/off button is pressed for a long time when the mobile communication terminal 100 is in the active state. However, the mobile communication terminal 100 may be inactivated to be in a communicable state in which a phone call can be received if the on/off button is pressed for a short time.

The activation button 120 is a means for switching the mobile communication terminal 100 from the inactive state to the active state. That is, if the user presses the activation button 120 when the mobile communication terminal 100 is in the inactive state, the mobile communication terminal 100 is switched to the active state. FIG. 1 illustrates a state in which a lock screen is displayed on the display unit 110 by pressing the activation button 120 when the mobile communication terminal 100 is in the inactive state. However, the activation button 120 may function as a means for another operation (for example, a means for moving to a standby screen while a certain operation state is displayed on the display unit 110 or a means for displaying a list of programs being currently executed).

According to an embodiment of the present invention, if the user presses the activation button 120 when the mobile communication terminal 100 is in the inactive state, the mobile communication terminal 100 performs a predetermined operation in addition to being switched to the active state. When the mobile communication terminal 100 is in the inactive state, the user can set an operation to be performed by pressing the activation button 120. For example, the operation of the mobile communication terminal 100 connected to the activation button 120 may be set in a setting menu through the interface displayed in the display unit 110. In addition, according to an embodiment of the present invention, when the mobile communication terminal 100 is in the inactive state, various operations may be performed depending on the number of times or duration of time the activation button 120 is pressed. For example, a first operation may be set to be performed when the activation button 120 is pressed once, and a second operation may be set to be performed when the activation button 120 is pressed three times consecutively. As another example, the first operation may be set to be performed when the activation button 120 is pressed once for a short time, and a second operation may be set to be performed when the activation button 120 is pressed once for a long time. In order to count the number of consecutive presses of the activation button 120 and measure a press time of the activation button 120, the mobile communication terminal 100 may include a certain clock circuit or timer. For example, if the activation button 120 is pressed and then repressed within a threshold time, it may be determined that the button is pressed twice. If the activation button 120 is pressed for more than a threshold period of time, it may be determined that the button is pressed for a long time. Operations capable of being performed by pressing the activation button 120 in the inactive state will be described later.

According to an embodiment of the present invention, a sub-display unit 121 may be provided on the activation button 120. Information about an operation to be performed by pressing the activation button 120 may be displayed on the sub-display unit 121. Various types such as a shape, a text, a character, a graphic, and a color can be displayed. When the display type is the shape, a circle, a triangle, a rectangle, a hexagon, or the like may be displayed. For example, the circle may be displayed on the sub-display unit 121 when the first operation is set to be performed by pressing the activation button 120, and the triangle may be displayed on the sub-display unit 121 when the second operation is set to be performed by pressing the activation button 120, and vice versa. A display type of the sub-display unit 121 and a correspondence relation between operations and displays can also be set by the user. For example, the user may select the first operation as the operation to be performed by pressing the activation button 120 from a setting menu and select the triangle as the display type of the sub-display unit 121 of the activation button 120. Accordingly, the user can recognize that the first operation is performed when the user has pressed the activation button 120 because the triangle is displayed on the sub-display unit 121 even when the mobile communication terminal 100 is in the inactive state.

Although the sub-display unit 121 may be implemented by a general display device such as liquid crystal, a liquid crystal display (LCD), or a light emitting diode (LED), the present invention is not limited thereto.

An operation of controlling driving of the display unit 110 and the sub-display unit 121 may or may not be performed by the same processor and in the same method.

Hereinafter, various embodiments for operations of the mobile communication terminal 100 capable of being performed by pressing the activation button 120 will be described.

### Operations through activation button

Operations to be described below may be performed by pressing the activation button 120 when the mobile communication terminal 100 is in the inactive state, which may be set by the user. The operations described below are only examples. Of course, other operations can be performed by pressing the activation button 120.

### 1. Camera activation function

When the mobile communication terminal 100 is in the inactive state, the camera 130 provided in the mobile communication terminal 100 can be activated by pressing the activation button 120, and a screen currently imaged by the camera 130 can be displayed on the display unit 110.

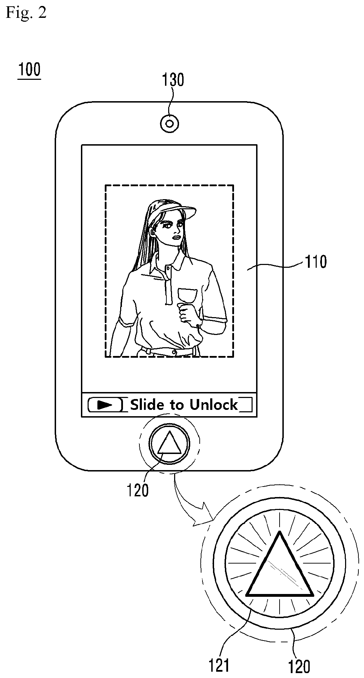

FIG. 2 is a diagram illustrating an example in which the camera 130 is activated after the activation button 120 is pressed and an image is displayed on the display unit 110.

### 2. Health sensing and health information transmission functions

When the mobile communication terminal 100 is in the inactive state, a health sensing function can be driven by pressing the activation button 120, so that sensed health information can be transmitted to a medical authority such as a doctor, or a guardian.

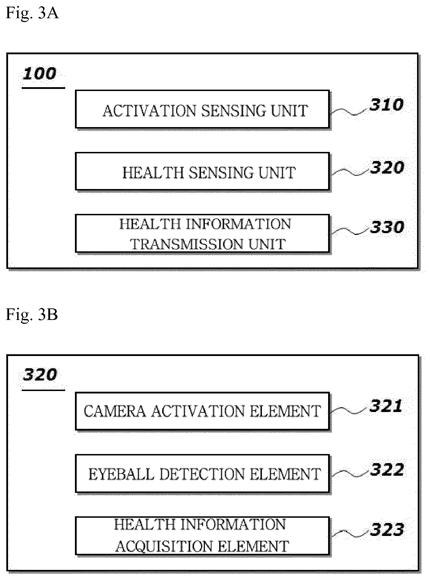

FIGS. 3A and 3B are block diagrams illustrating the operations of the mobile communication terminal 100 according to an embodiment of the present invention. FIGS. 3A and 3B illustrate functional block diagrams illustrating the above-described functions of the mobile communication terminal 100.

Referring to FIG. 3A, the mobile communication terminal 100 may include an activation sensing unit 310, a health sensing unit 320, and a health information transmission unit 330.

When the mobile communication terminal 100 is in the inactive state, the activation sensing unit 310 senses whether the activation button 120 is pressed by the user.

The health sensing unit 320 is operated when the activation sensing unit 310 senses that the activation button 120 is pressed, and senses a health state of the user in various methods.

FIG. 3B is a block diagram illustrating an example of the health sensing unit 320. Referring to FIG. 3B, the health sensing unit 320 may include a camera activation element 321, an eyeball detection element 322, and a health information acquisition element 323.

The camera activation element 321 activates the camera 130 provided in the mobile communication terminal 100. According to the activation of the camera 130, a video currently captured by the camera 130 is displayed on the display unit 110. If an eye or face of the user is imaged by the camera 130, the eyeball detection element 322 performs a function of recognizing and extracting an eyeball of the user. A general eyeball detection algorithm may be used for eyeball detection. The health information acquisition element 323 acquires various health information from the eyeball detected by the eyeball detection element 322. It is possible to recognize a stress index, a diabetes index, or retinal diseases of the user from a color or health state of the eyeball. A well-known algorithm in the related art can be used as an algorithm for detecting health information from characteristics of the detected eyeball.

The health information acquired as described above can be transmitted by the health information transmission unit 330 to the mobile communication terminal of a guardian, a medical authority such as a doctor or the like, or a predetermined server. Information regarding the guardian (for example, a phone number or an e-mail address) can be stored in advance. The acquired health information can be displayed on the display unit 110 so that the user can check the acquired health information.

The above-described operations, that is, the eyeball detection function and the health sensing function based on information regarding the detected eyeball, can be performed by installing a predetermined application. That is, the application includes an eyeball detection algorithm and a health sensing algorithm, so that the operations as described above can be performed by installing the application in the mobile communication terminal 100. The user may download this application and install the downloaded application in the mobile communication terminal 100..In addition, although only an example of health sensing through eyeball detection has been described above, it is also possible, for example, to install an application for health sensing through face detection and connect the application to the activation button 120. The user can use the functions as described above by setting the application through the setting menu to be operated immediately when the activation button 120 is pressed in the inactive state of the mobile communication terminal 100.

In general, aged persons may not use the health sensing function due to a difficult operation even when the health sensing function is provided in the mobile communication terminal 100. However, according to the above-described embodiment of the present invention, the health sensing function is operated only by pressing the activation button 120 without a special operation. Accordingly, it is possible to easily check health information and transmit the health information to a guardian or a doctor.

### 3. User identification function

When the mobile communication terminal 100 is in the inactive state, a user authentication process can be performed for security by pressing the activation button 120.

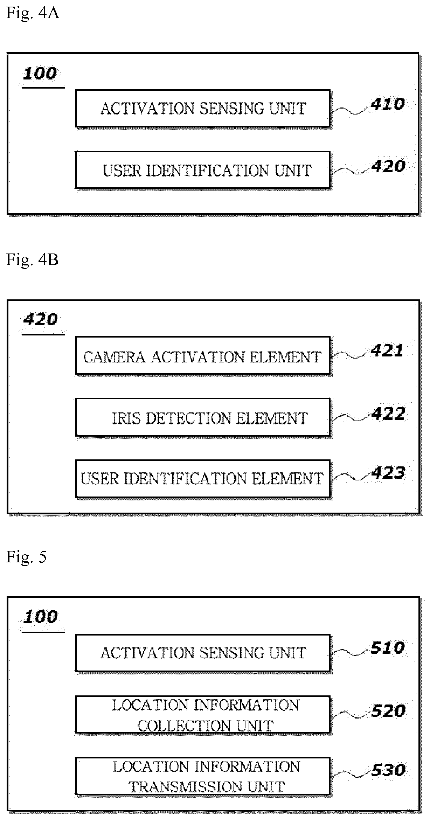

FIGS. 4A and 4B illustrate block diagrams of the mobile communication terminal 100 illustrating the above-described functions. Referring to FIG. 4A, the mobile communication terminal 100 may include an activation sensing unit 410 and a user identification unit 420.

When the mobile communication terminal 100 is in the inactive state, the activation sensing unit 410 senses whether the activation button 120 is pressed by the user.

When it is sensed by the activation sensing unit 410 that the activation button 120 is pressed, the user identification unit 420 operates the user identification function in various methods.

FIG. 4B is a block diagram illustrating an example of the user identification unit 420. Referring to FIG. 4B, the user identification unit 420 may include a camera activation element 421, an iris detection element 422, and a user identification element 423.

The camera activation element 421 activates the camera 130 provided in the mobile communication terminal 100. According to the activation of the camera 130, a video currently captured by the camera 130 is displayed on the display unit 110. If an eye or face of the user is imaged by the camera 130, the iris detection element 422 performs a function of recognizing and extracting an iris from an eyeball of the user. A general iris detection algorithm can be used for iris recognition. The user identification element 423 performs a function of comparing the iris detected by the iris detection element 422 to pre-stored iris information of the user, and authenticating the current user as a true user if the two match. For this, the user identification element 423 can use iris information of the user pre-stored in a database (not illustrated). The iris information of the user can be stored by registering information regarding the iris detected by the iris detection element 422 using a video of the true user first captured by the camera 130. Predetermined identification information (for example, an identifier (ID), a password, a social security number, or the like) should be input to change the registered iris information of the true user. If the user identification element 423 authenticates the current user as the true user, the lock state of the mobile communication terminal 100 is released and all functions are available. If the current user is not authenticated as the true user, the lock state continues along with a display of an alarm message.

The above-described operations, that is, the iris detection function, the user identification function, and the user authentication function, can be performed by installing a predetermined application. That is, the application includes the iris detection algorithm and the authentication algorithm based on an iris comparison, so that the operations as described above can be performed by installing the application in the mobile communication terminal 100. The user can download this application and install the downloaded application in the mobile communication terminal 100. The user can use the functions as described above by setting the application through the setting menu to be operated immediately when the activation button 120 is pressed in the inactive state of the mobile communication terminal 100.

Accordingly, it is possible to efficiently reduce security risks by setting the user authentication process to be performed through a separate setting, that is, by pressing the activation button 120, when the mobile communication terminal 100 is used in a region vulnerable to the security risks.

Although an example of an authentication method through iris recognition has been described above, other authentication methods, for example, an authentication key matching method, a password matching method, a face recognition method, a fingerprint recognition method, and the like, can be used. That is, one or more authentication methods can be performed by pressing the activation button 120.

### 4. Location information transmission function

When the mobile communication terminal 100 is in the inactive state, collected location information can be transmitted to a guardian or a protection authority (a police station or a fire station) by pressing the activation button 120.

FIG. 5 illustrates a block diagram of the mobile communication terminal 100 illustrating the above-described function. Referring to FIG. 5, the mobile communication terminal 100 may include an activation sensing unit 510, a location information collection unit 520, and a location information transmission unit 530.

When the mobile communication terminal 100 is in the inactive state, the activation sensing unit 510 senses whether the user has pressed the activation button 120.

When the activation sensing unit 510 senses that the activation button 120 has been pressed, the location information collection unit 520 collects a current location using a global positioning system (GPS) sensor or other location sensors.

The location information transmission unit 530 performs a function of transmitting location information collected by the location information collection unit 520 to a guardian or a protection authority. In an urgent situation, a message indicating the urgent situation can be transmitted along with the location information. The location information and the urgent message can be selectively transmitted. Meanwhile, this operation may differ according to the number of times or duration of time the activation button 120 is pressed. For example, it is possible to set an operation of transmitting the urgent message to a police station along with the location information when the activation button 120 is pressed once for a short time, and set an operation of transmitting only the location information to the guardian when the activation button 120 is pressed once for a long time. In addition, as another example, it is possible to set an operation of transmitting the location information to the police station along with the urgent message when the activation button 120 is pressed once and set an operation of transmitting the location information to a fire station along with the urgent message when the activation button 120 is pressed three times.

The above-described operations can be performed by installing a predetermined application. That is, the application includes an algorithm for collecting location information and transmitting the collected located information along with an urgent message, so that the operations as described above can be performed by installing the application in the mobile communication terminal 100. The user can download this application and install the downloaded application in the mobile communication terminal 100. The user can use the functions as described above by setting the application through the setting menu to be operated immediately when the activation button 120 is pressed in the inactive state of the mobile communication terminal 100.

Accordingly, it is possible to efficiently cope with a dangerous situation because the user can report the dangerous situation to a guardian or a protection authority along with his/her location information with only a simple operation.

### 5. File transmission function

When the mobile communication terminal 100 is in the inactive state, a function of uploading content (for example, contact information, a photo, a moving image, or an application) included in the mobile communication terminal 100 to another mobile communication terminal 100 or a media space (for example, a personal media space such as Twitter, Facebook, or a blog or a community media space such as a café or club community) can be operated.

### 6. Mode change during drive

When the mobile communication terminal 100 is in the inactive state, the mobile communication terminal 100 can be switched to a hands-free function or some communication functions (a voice call function, a short message service (SMS) function, and an Internet function) of the mobile communication terminal 100 can be interrupted by pressing the activation button 120.

Accordingly, it is possible to significantly reduce traffic accident risks by switching the mobile communication terminal 100 to a hand-free mode or interrupting the communication function with only a simple operation of pressing the activation button 120 during driving.

### 7. Advertisement display operation

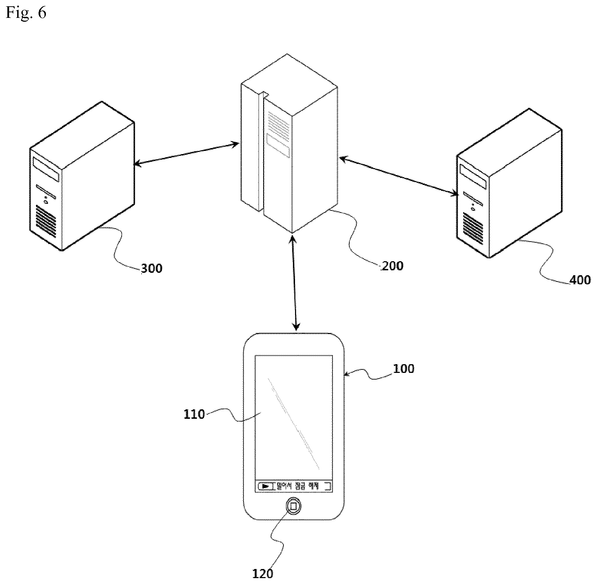

FIG. 6 is a view schematically illustrating an overall configuration of a system for displaying an advertisement when the mobile communication terminal is activated, according to an embodiment of the present invention.

Referring to FIG. 6, the overall system according to an embodiment of the present invention may be include a mobile communication terminal 100, an advertisement providing system 200, an advertiser server 300, and a service providing server 400.

According to an embodiment, the mobile communication terminal 100, the advertisement providing system 200, the advertiser server 300, and the service providing server 400 may communicate with each other over a communication network. The communication network may be wired or wireless, and examples of the communication network may include, but not limited to, a Local Area Network (LAN), a Metropolitan Area Network (MAN), and a Wide Area Network (WAN). Preferably, the communication network according to an embodiment of the present invention may be the World Wide Web (WWW).

According to an embodiment, the mobile communication terminal 100 may include a display unit 110 and an activation button 120.

Although the display unit 110 is provided on an entire surface of a frame constituting the mobile communication terminal 100 and the activation button 120 may be provided on a lower portion of the display unit 110 as illustrated in FIG. 6, the present invention may be configured in a variety of different ways. For example, the display unit 110 is not necessarily formed on the entire surface of the mobile communication terminal 100. That is, the display unit 110 is only required to be formed on at least a portion of the mobile communication terminal 100 and the activation button 120 may be formed on a part different from that of the display unit 110.

The display unit 110 displays a variety of information about operation states of the mobile communication terminal 100, and also displays an interface for a user's input when the mobile communication terminal 100 is a touchscreen-driven terminal. In general, if a state in which the user's operation on the mobile communication terminal 100 is absent continues for a predetermined period of time, the mobile communication terminal 100 is switched to the inactive state. The user's operation refers to an input through the interface displayed on the display unit 110, an operation through the activation button 120, or an operation through a function key (for example, a volume control key or the like). A condition for switching to the inactive state may be set by a user. For example, the condition may be set in a setting menu through the interface displayed on the display unit 110. As an example, the mobile communication terminal 100 may be switched to the inactive state when there has been no user's input for a certain time. Meanwhile, the mobile communication terminal 100 may be switched to the inactive state by pressing another button (for example, an on/off button) provided thereon. For example, the mobile communication terminal 100 may be completely powered off if the on/off button is pressed for a long time when the mobile communication terminal 100 is in the active state. However, the mobile communication terminal 100 may be inactivated to be in a communicable state in which a phone call can be received if the on/off button is pressed for a short time.

The activation button 120 is a means for switching the mobile communication terminal 100 from the inactive state to the active state. That is, if the user presses the activation button 120 when the mobile communication terminal 100 is in the inactive state, the mobile communication terminal 100 is switched to the active state. FIG. 6 illustrates a state in which a lock screen is displayed on the display unit 110 by pressing the activation button 120 when the mobile communication terminal 100 is in the inactive state. However, the activation button 120 may function as a means for another operation (for example, a means for moving to a standby screen while a certain operation state is displayed on the display unit 110 or a means for displaying a list of programs being currently executed).

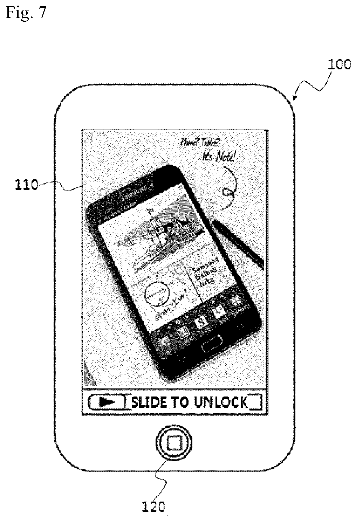

According to an embodiment of the present invention, if the user presses the activation button 120 when the mobile communication terminal 100 is in the inactive state, the mobile communication terminal is not switched to the active state, but a predetermined advertisement is displayed on the display unit 110. FIG. 7 is a view illustrating an example in which an advertisement is displayed on the display unit 110 when the mobile communication terminal 100 is switched from the inactive sate to the active state according to an embodiment of the present invention.

According to an embodiment of the present invention, the advertisement may be displayed by driving an application previously installed in the mobile communication terminal 100. That is, an application is driven for activating the mobile communication terminal 100 through the activation button 120 and simultaneously enabling the advertisement to be displayed, and thus the advertisement may be displayed on the display unit 110. This application may be previously transmitted from an external system such as the advertisement providing system 200 or the advertiser server 300 and then installed.

As another embodiment, when the mobile communication terminal 100 is activated, the advertisement provided by the advertisement providing server 200 may be displayed on the display unit 110. Advertisement information from the advertisement providing server 200 may be received before the mobile communication terminal 100 is activated (for example, when inactivated or at other times) or at the same time as the mobile communication terminal 100 is activated.

Advertisements may be randomly selected and displayed, or only advertisements selected under a predetermined condition may be displayed.

According to an embodiment of the present invention, only advertisements associated with the current position information of the mobile communication terminal 100 may be displayed (implemented in conjunction with "4. Location information transmission function" described above). Specifically, on the basis of the current location information of the mobile communication terminal 100, the advertisements for companies around the current position may be displayed. The location information of the mobile communication terminal 100 may be sensed upon activation or in real time.

According to another embodiment, customized advertisements may be displayed based on user information of the mobile communication terminal 100. For example, advertisements for associated companies may be displayed based on a gender, an age, a region of residence, an occupation, a matter of interest, and the like of a user. The user information may be input and stored by the user when the user subscribes to an advertisement providing service or installs an application for displaying an advertisement. The user information may be stored in the mobile communication terminal 100 or transmitted and stored to the advertisement providing server 200.

According to still another embodiment, different advertisements may be displayed on the display unit 110 by time of day. For example, advertisements for restaurant businesses may be displayed in a meal time, and advertisements for soap operas may be displayed in a soap opera time.

Elements for determining the displayed type of advertisements have been described above, but at least two of the elements may be combined with each other and used to determine the type of advertisements. For example, an advertisement may be displayed in consideration of both location information and user information. Moreover, the advertisement may include a brand advertisement, a program advertisement, a service advertisement, a promotion advertisement, and an event advertisement.

According to an embodiment of the present invention, if a user enters an additional input when an advertisement is displayed on the display unit 110, various operations may be achieved. For example, if the user clicks on the displayed advertisement, movement to a webpage associated with the advertisement is achieved. The webpage may provide information about a company or product associated with the advertisement, discount information, location information, and so on.

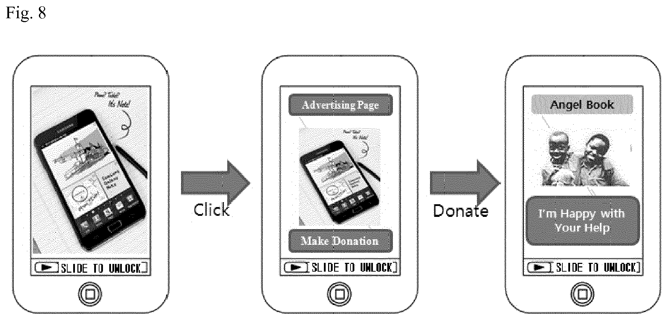

As another example, some of advertising revenue earned by an advertisement provider by clicking on the advertisement may be used as donation money. FIG. 8 is a view illustrating a process of using some of advertising revenue as a donation by clicking on the advertisement displayed on the display unit 110. Referring to FIG. 8, an interface for selecting whether to save donation money may be provided by clicking an advertisement, and if a user requests to save donation money, some of advertising revenue may be used as the donation money and an indication associated with this (for example, a social network page such as Angel Book) may be displayed.

According to an embodiment of the present invention, when the mobile communication terminal 100 is activated, a specific application may be executed, but an advertisement may be displayed only when there is no update of the information provided by the application to the user. For example, when the mobile communication terminal 100 is activated, a social network service provided by the service providing server is driven to display a corresponding page on the display unit 110. In this case, the advertisement may be displayed only when there is no new content in the corresponding page, which is not checked by the user.

An overall system for displaying an advertisement when the mobile communication terminal is activated according to an embodiment of the present invention will be described below.

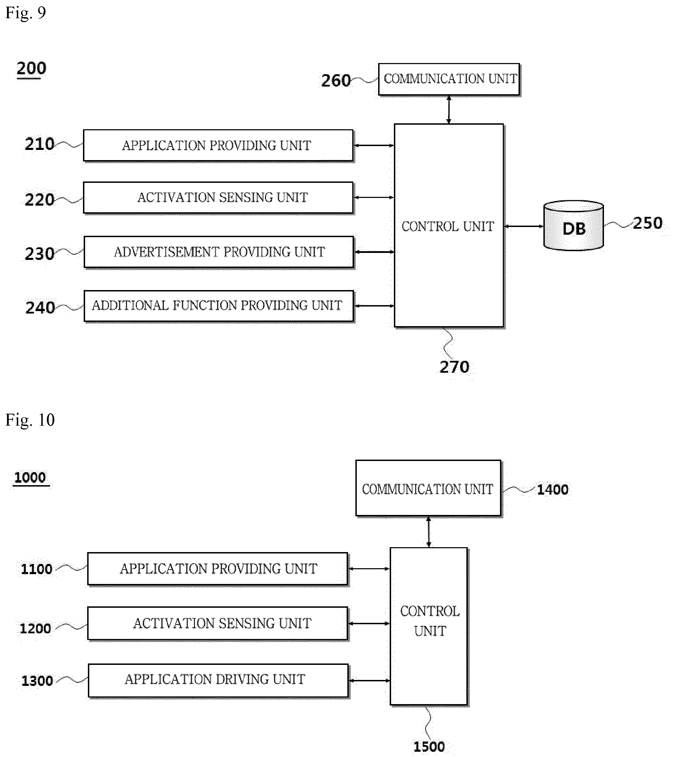

FIG. 9 is a view illustrating a configuration of an advertisement providing system according to an embodiment of the present invention.

Referring to FIG. 9, the advertisement providing system 200 may include an application providing unit 210, an activation sensing unit 220, an advertisement providing unit 230, an additional function providing unit 240, a database 250, a communication unit 260, and a control unit 270. According to an embodiment of the present invention, each of the application providing unit 210, the activation sensing unit 220, the advertisement providing unit 230, the additional function providing unit 240, the database 250, the communication unit 260, and the control unit 270 may be a program module or a hardware component capable of communicating with an external apparatus. The program module or hardware component may be included, as an operating system, an application program module, or a program module, in the advertisement providing system 200 or another apparatus capable of communicating therewith and physically stored on various well-known memory devices. Examples of the program module or hardware component include, but not limited to, a routine, a sub-routine, a program, an object, a component, and a data structure for performing a specific task to be described later or executing a specific abstract data type.

When the mobile communication terminal 100 is switched to the active state, the application providing unit 210 provides an application for displaying an advertisement on the display unit 110. The user may access the advertisement providing system 200 through the mobile communication terminal 100 to receive and install the application. The application may include a function of transmitting location information, user information, or time information of the mobile communication terminal 100. However, if an advertisement is distributed to the display unit 110 when the mobile communication terminal 100 is switched to the active state without installation of the application, the application providing unit 210 may be omitted.

The activation sensing unit 220 according to an embodiment of the present invention may sense that the mobile communication terminal 100 is switched from the inactive state to the active state. The mobile communication terminal 100 may transmit a signal indicating occurrence of activation to the service providing server 200 by the user pressing the activation button 120 of the mobile communication terminal 100.

The advertisement providing unit 230 according to an embodiment of the present invention performs a function of displaying a predetermined advertisement on the display unit 110 of the mobile communication terminal 100 when it is sensed that the mobile communication terminal 100 is activated. The advertisement may be previously stored in the mobile communication terminal 100 or in the database 250 of the advertisement providing system 200. The advertisement providing system 200 may receive advertisement content from the advertiser server 300 and store the advertisement content to the database 250. The advertisement content may be categorized and stored according to a predetermined classification. For example, the advertisement content to be provided by location, user characteristic, and time may be classified and stored. The advertisement providing unit 230 may select advertisement content, which is required to be provided when the mobile communication terminal 100 is activated, from the database 250 under a predetermined condition to provide the selected advertisement content to the mobile communication terminal 100. In a case in which an application provided from the service providing server 400 is set to be driven when the mobile communication terminal 100 is switched to the active state, the advertisement may be provided when the application is driven or when the application has no new information to be provided to the user.

However, according to another embodiment of the present invention, since an application provided by the application providing unit 210 includes both advertisement content and condition information about advertisements to be displayed, the mobile communication terminal 100 may autonomously perform an advertisement display operation when the mobile communication terminal 100 is switched to the active state.

The additional function providing unit 240 according to an embodiment of the present invention performs an additional function according to a request of the user on the basis of an advertisement provided by the advertisement providing unit 230. For example, a function of displaying additional information of the advertisement, moving to a related webpage, providing information about an advertisement target product or service, or utilizing some of advertisement revenue as donation money may be provided corresponding to click on the advertisement by a user.

According to a modification of the present invention, the above-described functions of the advertisement providing system 200 may be autonomously performed in the mobile communication terminal 100. That is, the additional function may be driven through the display of the advertisement and the click on the advertisement by sensing the activation in the mobile communication terminal 100.

The communication unit 260 according to an embodiment of the present invention allows information to be communicated between the advertisement providing system 200 and each of the mobile communication terminal 100, the advertiser server 300, and the service providing server 400.

The control unit 270 according to an embodiment of the present invention may perform a function of controlling the flow of data among the application providing unit 210, the activation sensing unit 220, the advertisement providing unit 230, the additional function providing unit 240, the database 250, and the communication unit 260. That is, the control unit 270 according to an embodiment of the present invention may control the application providing unit 210, the activation sensing unit 220, the advertisement providing unit 230, the additional function providing unit 240, the database 250, and the communication unit 260 to perform their unique functions.

### 8. Other application operations

If a predetermined operation is performed in addition to simply switching to an active state by pressing the activation button 120 when the mobile communication terminal 100 is in the inactive state, this belongs to the scope of the present invention.

For example, an entertainment operation (for example, an operation of a music or video player, execution of a game application, or reception of news) can be performed by pressing the activation button 120.

### Operation standby of application

According to an embodiment of the present invention, the above-described predetermined applications are driven when the mobile communication terminal 100 is switched from the inactive state to the active state.

For this, when the mobile communication terminal 100 is in the inactive state, the applications should be maintained in an operation standby state. When the mobile communication terminal 100 is switched from the active state to the inactive state, the above-described applications can be in the operation standby state. That is, a selected application to be driven when the mobile communication terminal 100 is switched to the active state can be in the operation standby state when the mobile communication terminal 100 is switched to the inactive state.

However, a predetermined application operable when the mobile communication terminal 100 is switched from the inactive state to the active state regardless of the operation standby state or an operation disable state of the application belongs to the present invention.

### Service providing server

Hereinafter, the service providing server according to an embodiment of the present invention will be described.

FIG. 10 is a view illustrating a configuration of a service providing system (server) for enabling a specific function to be operated when the mobile communication terminal is activated according to an embodiment of the present invention.

In this embodiment, the description of the advertisement providing system for "7. Advertisement display operation" is the same as described above. That is, the description of the advertisement providing server may be applied to operations other than "7. Advertisement display operation."

Referring to FIG. 10, a service providing server 1000 may include an application providing unit 1100, an activation sensing unit 1200, an application driving unit 1300, a communication unit 1400, and a control unit 1500. According to an embodiment of the present invention, each of the application providing unit 1100, the activation sensing unit 1200, the application driving unit 1300, the communication unit 1400, and the control unit 1500 of the service providing server 1000 may be a program module or hardware component capable of communicating with an external apparatus. The program module or hardware component may be included, as an operating system, an application program module, or a program module, in the mobile communication terminal 100 or another apparatus capable of communicating therewith and physically stored on various well-known memory devices. Examples of the program module or hardware component include, but not limited to, a routine, a sub-routine, a program, an object, a component, and a data structure for performing a specific task to be described later or executing a specific abstract data type.

The application providing unit 1100 enables the predetermined application described above to be transmitted to the mobile communication terminal 100. The user may access the service providing server 1000 through the mobile communication terminal 100 to receive and install a desired application in the mobile communication terminal 100. The application may include a control function of allowing a predetermined operation to be performed when the mobile communication terminal 100 is activated, and can independently perform the predetermined operation.

The activation sensing unit 1200 according to an embodiment of the present invention may sense that the mobile communication terminal 100 is switched from the inactive state to the active state. The mobile communication terminal 100 may transmit a signal for informing occurrence of activation to the service providing server 1000 by the user pressing the activation button 120 of the mobile communication terminal 100.

The application driving unit 1300 according to an embodiment of the present invention enables a predetermined operation to be performed in the mobile communication terminal 100 when the activation of the mobile communication terminal 100 is sensed. That is, the application driving unit 1300 drives a predetermined application within the mobile communication terminal 100 and enables a related screen to be displayed on the display unit 110. The application driving unit 1300 can perform an additional operation associated with driving of a corresponding application. As described above, the application driving unit 1300 can drive the predetermined application simultaneously with the activation within the mobile communication terminal 100 and perform an additional operation for optimally driving the application.

The communication unit 1400 according to an embodiment of the present invention may allow information to be communicated between the service providing server 1000, and the mobile communication terminal 100 and another apparatus. That is, the communication unit 1400 can transmit an application to the mobile communication terminal 100, receive an activation signal from the mobile communication terminal 100, and receive information for driving the application.

The control unit 1500 according to an embodiment of the present invention may perform a function of controlling the data flows between the application providing unit 1100, the activation sensing unit 1200, the application driving unit 1300, the communication unit 1400, and the control unit 1500. That is, the control unit 1500 according to an embodiment of the present invention may control the application providing unit 1100, the activation sensing unit 1200, the application driving unit 1300, the communication unit 1400, and the control unit 1500 to perform their unique functions.

The embodiments according to the present invention described above may be implemented in the form of program instructions that may be executed through various computer components and recorded on a computer-readable medium. The computer-readable recording medium may include program instructions, data files, data structures, and the like individually or in combination. The program instructions recorded on the medium may be specifically designed for the present invention or may be well known to one of ordinary skill in the art of software. Examples of the computer-readable recording medium include a magnetic medium such as a hard disk, a floppy disk, or a magnetic tape, an optical medium such as a compact disc-read only memory (CD-ROM) or a digital versatile disc (DVD), a magneto-optical medium such as a floptical disk, and a hardware device such as a ROM, a random access memory (RAM), or a flash memory that is specially designed to store and execute program instructions. Examples of the program instructions include not only machine language codes generated by a compiler or the like but also high-level language codes that may be executed by a computer using an interpreter or the like. The hardware device described above may be constructed so as to operate as one or more software modules for performing the operations of the embodiments of the present invention, and vice versa.

According to the present invention, it is possible to beneficially utilize a terminal and also enhance an interest in using the terminal because various operations may be performed only by pressing an activation button when the terminal is in an inactive state.

According to the present invention, it is also possible to perform health check of an aged person with only a simple operation and transmit information regarding the health check to a guardian or medical authority.

According to the present invention, it is also possible to operate a security-enhanced user authentication process with only a simple procedure.

According to the present invention, it is also possible to transmit an urgent message in addition to location information to a necessary recipient with only a simple operation in an urgent situation.

According to the present invention, it is also possible to generate an advertising revenue and an efficient advertising effect by displaying an advertisement on the terminal when the activation button is habitually pressed by a user, by connecting an advertising display function to the activation button provided in the terminal.

Although the present invention has been described with reference to the specific embodiments and drawings together with specific details such as detailed components, the above description is provided only for better understanding of the present invention and it will be apparent to those skilled in the art that various modifications and variations may be made from the above description.

While exemplary embodiments have been disclosed herein, it should be understood that other variations may be possible. Such variations are not to be regarded as a departure from the spirit and scope of exemplary embodiments of the present application, and all such modifications as would be obvious to one skilled in the art are intended to be included within the scope of the following claims.

## Claims

1. A mobile communication terminal 100) comprising:
a display unit(110);
an activation button(120) configured to switch the terminal(100) from its inactive state to its active state when pressed in the inactive state, wherein the terminal(100) in the inactive state is communicable but the display unit(110) is turned off and wherein the terminal(100) in the active state is communicable and the display unit(1 10) is turned on; and
a camera(130),
wherein, in response to a pressing of the activation button(120) while the terminal(100) is in the inactive state, the terminal(100) switches into the active state and displays a lock screen on the display unit(1 10) in a lock state;
wherein in response to the pressing of the activation button(120) while the terminal(100) is in the inactive state, the terminal(100) also performs a user authentication process for a user who pressed the activation button(120);
wherein, when said user succeeds the user authentication process, the lock state is released, but when said user fails the user authentication process, the terminal(100) remains in the lock state, and
wherein the user authentication process is performed immediately when the activation button(120) is pressed in the inactive state of the terminal(100).

2. The terminal according to claim 1, wherein the user authentication process is performed by activating the camera(130) and by capturing an image of said user.

3. The terminal according to claim 2, wherein the camera(130) obtains the image a face of the user and wherein the terminal(100) authenticates the user using face recognition process.

4. The terminal according to claim 3, wherein the terminal(100) performs the face recognition process by comparing the image of the face of the user with pre-stored face information.

5. The terminal according to claim 2, wherein the camera(130) obtains the image of an iris of the user and wherein the terminal(100) authenticates the user using iris recognition process.

6. The terminal according to claim 5, wherein the terminal(100) performs the iris recognition process by comparing the image of the iris of the user with pre-stored iris information.

7. The terminal according to claim 1, wherein the terminal(100) authenticates the user using fingerprint recognition process.

8. The terminal according to claim 7, wherein the terminal(100) performs the fingerprint recognition process by comparing the fingerprint of the user with pre-stored fingerprint information.

9. The terminal according to claim 1 to 8, wherein the camera(130) is provided on an upper portion of the display unit(1 10).

10. The terminal according to claims 1 to 9, wherein the terminal(100) performs the user authentication process when the activation button(120) is pressed once for a short time, but wherein the terminal(100) performs a function which is different from the user authentication process when the activation button(120) is pressed once for a long time.

11. The terminal according to claim 10, wherein the function different from the user authentication process includes at least one of a camera activation function and a hands-free function.

12. The terminal according to claims 1 to 9, wherein the terminal(100) performs the user authentication process when the activation button(120) is pressed once, and performs a different function other than the user authentication process when the activation button(120) is pressed and then pressed again within a threshold time.

13. The terminal according to claim 12, wherein the different function other than the user authentication process includes at least one of a camera activation function and a hands-free function.
